# FASCICULE DE BREVET EUROPEEN

(11) **EP 1 139 721 B1**
(45) Date de publication et mention de la délivrance du brevet: **02.01.2003**
(21) Numéro de dépôt: 99970568.4
(22) Date de dépôt: 20.10.1999
(51) Int. Cl.: A01G 27/06

(54) **DISPOSITIF D'HUMIDIFICATION DE PLANTES EN POTS**
BEFEUCHTUNGSVORRICHTUNG FÜR TOPFPFLANZEN
HUMIDIFYING DEVICE FOR POTTED PLANTS

(30) Priorité: 20.10.1998 FR 9813183
(43) Date de publication de la demande: 10.10.2001
(73) Titulaire: Vieville, Michel, 34980 Saint Clément de Rivière (FR)
(72) Inventeur: Vieville, Michel, 34980 Saint Clément de Rivière (FR)
(86) Numéro de dépôt international: EP9907959
(87) Numéro de publication internationale: WO00022918

(56) Documents cités:
- FR-A- 2 576 177
- US-A- 4 117 631
- US-A- 4 895 254

## Description

La présente invention a pour objet un dispositif d'humidification de plantes en pot.

Les dispositifs d'humidification de plantes en pots actuels sont généralement constitués d'une réserve d'eau installée au fond du pot et qui humidifie le substrat de la plante au moyen d'une mèche ou par contact direct du substrat avec l'eau contenue dans ladite réserve. Mais ces dispositifs ne permettent pas de s'adapter aux pots de différents volumes et de formes différentes.

Pour remédier à ces inconvénients plusieurs dispositifs ont été mis au point tels que celui décrit dans le document FR-A-2576177 qui comprend au moins deux récipients réalisés en matériau rigide ou semi-rigide et dont l'un au moins présente un entonnoir destiné à son remplissage d'eau, lesdits récipients étant réunis par un soufflet déformable et l'eau qui diffuse dans des mèches est stockée dans l'enceinte constituée par lesdits récipients et lesdits soufflets.

Toutefois, si ce dispositif présente des dimensions variables, il ne permet pas une adaptation optimum à des pots de diamètre différents et de formes variées.

Le document US4117631 décrit également un dispositif d'humidification de plantes en pots dont les dimensions sont réglables et qui comprend dans l'un de ses modes de réalisation un tuyau annelé formant un réservoir d'eau pouvant être roulé en spirale, ledit tuyau annelé comportant une extrémité externe évasée destinée au remplissage du réservoir et une extrémité interne qui est obturée par un bouchon muni
d'une ouverture pour le passage d'une mèche maintenue dans ladite ouverture.

Cependant ce dispositif, comme le dispositif précédent, ne permet pas d'obtenir un bon rapport terre/volume d'eau contenu dans la réserve et nécessaire à une bonne humidification dans le temps et dans l'espace occupé par ladite terre dans le pot.

Le document US-A-4 895 254 décrit un dispositif d'humidification comprenant un réservoir muni de systèmes de diffusion et d'alimentation en eau, constitué de deux parties verticales en forme de demi-couronnes reliées entre elles par une partie articulée. Ce réservoir peut se positionner en périphérie interne d'un pot.

Le dispositif selon l'invention permet de remédier à ces inconvénients en proposant un dispositif d'humidification adaptable à des pots de volume différents et de formes variées tout en offrant un bon rapport terre/volume d'eau contenue dans ledit dispositif.

Le dispositif d'humidification de plantes en pots selon la présente invention est du type comprenant un réservoir d'eau qui est destiné à être placé au fond desdits pots et qui est associé à des moyens pour la diffusion de l'eau dans le substrat de terre contenu dans lesdits pots et à un dispositif d'alimentation en eau dudit réservoir, et se caractérise essentiellement en ce que ledit réservoir est constitué d'une pièce centrale rigide entourée d'une partie adaptable au diamètre ou à la forme du fond des pots qui vont le contenir.

Conformément à l'invention la pièce centrale rigide présente une forme globalement circulaire.

Dans un premier mode de réalisation de l'invention la partie déformable consiste en une succession d'éléments rigides ou semi rigides formant des segments en forme d'arc de cercle, de section rectangulaire ou ovale, reliés entre eux de manière que leur espace interne communique entre eux et avec celui de la pièce centrale rigide, lesdits éléments étant disposés en spirale autour de ladite pièce.

Les éléments peuvent comporter des moyens permettant de les solidariser les uns aux autres et de les désolidariser, par exemple par emboîtement de leurs extrémités. Ainsi, l'espace occupé par la partie déformable au fond du pot peut être modifié en ajoutant ou en enlevant des éléments rigides à la spirale.

Dans ce mode de réalisation le dispositif d'alimentation en eau peut être un tube relié, à l'une de ses extrémités, à l'extrémité libre d'un élément de la spirale par l'intermédiaire d'une pièce coudée.

Dans une variante de ce mode de réalisation la spirale est monobloc et est réalisée à partir d'éléments en arc de cercle de section rectangulaire ou ovale reliés entre eux par des éléments tubulaires, et les dimensions de la spirale peuvent être modifiées en coupant les éléments tubulaires de manière à préserver à l'extrémité libre de la spirale un élément tubulaire pour connecter le tube d'alimentation en eau du réservoir par l'intermédiaire d'une pièce coudée.

De manière à améliorer encore le rapport terre/volume d'eau contenu dans la réserve d'eau les éléments rigides posséderont à chaque pas de la spirale un volume et une hauteur supérieurs à ceux des éléments du pas précédent.

Dans un deuxième mode de réalisation de l'invention la partie déformable est constituée de soufflets positionnés en étoile autour de la partie centrale rigide et dont l'espace interne communique avec celui de la partie centrale, lesquels soufflets permettent, par compression concentrique, de modifier l'espace occupé dans le fond du pot par ladite partie déformable.

Dans un troisième mode de réalisation de l'invention la partie adaptable consiste en un tuyau qui peut être souple ou rigide, annelé, ou non, disposé en spirale autour de ladite partie centrale rigide et solidarisé à l'une des ses extrémités à cette dernière de manière que l'espace interne du tuyau communique avec celui de la partie centrale, lequel tuyau est fermé à son extrémité libre par un bouchon et peut être coupé à la dimension désirée en fonction de l'espace à occuper dans le fond du pot correspondant.

Dans un quatrième mode de réalisation de l'invention la partie adaptable est constituée d'une enveloppe étanche, réalisée en une matière élastique telle que du caoutchouc, et fermée, par exemple par encliquetage, sur la pièce rigide de manière à former une poche destinée à contenir l'eau du réservoir, laquelle poche est protégée du substrat de terre à humidifier par des moyens de protection lui évitant d'être écrasée par le substrat de terre.

Dans ces trois derniers modes de réalisation le dispositif d'alimentation en eau peut être un tube relié, à l'une de ses extrémités à l'espace interne de la pièce centrale.

Le tube d'alimentation d'eau de la réserve du dispositif d'alimentation peut avantageusement être un tube télescopique.

Les avantages et les caractéristiques de la présente invention ressortiront plus clairement de la description qui suit et qui se rapporte au dessin annexé, lequel en représente plusieurs modes de réalisation non limitatifs.
- la figure 1 représente une vue en perspective du dispositif d'humidification dans un premier mode de réalisation.
- la figure 2b représente une vue en élévation du dispositif d'humidification dans un deuxième mode de réalisation.

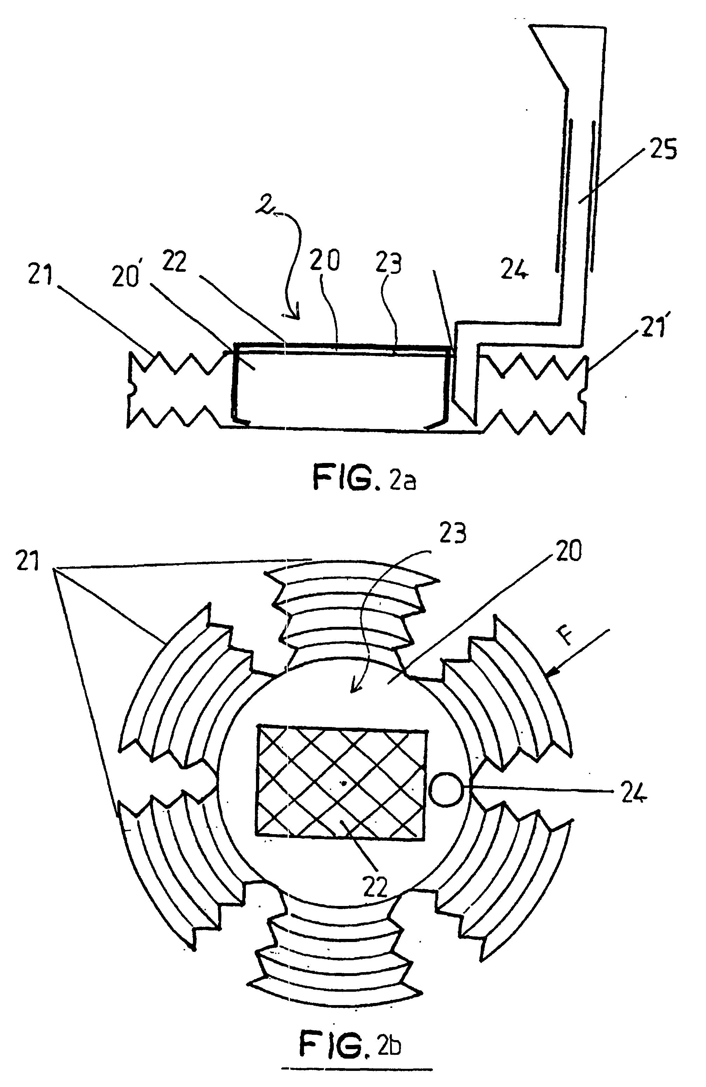

- la figure 2a représente une vue en coupe selon AA du dispositif d'humidification de la figure précédente.

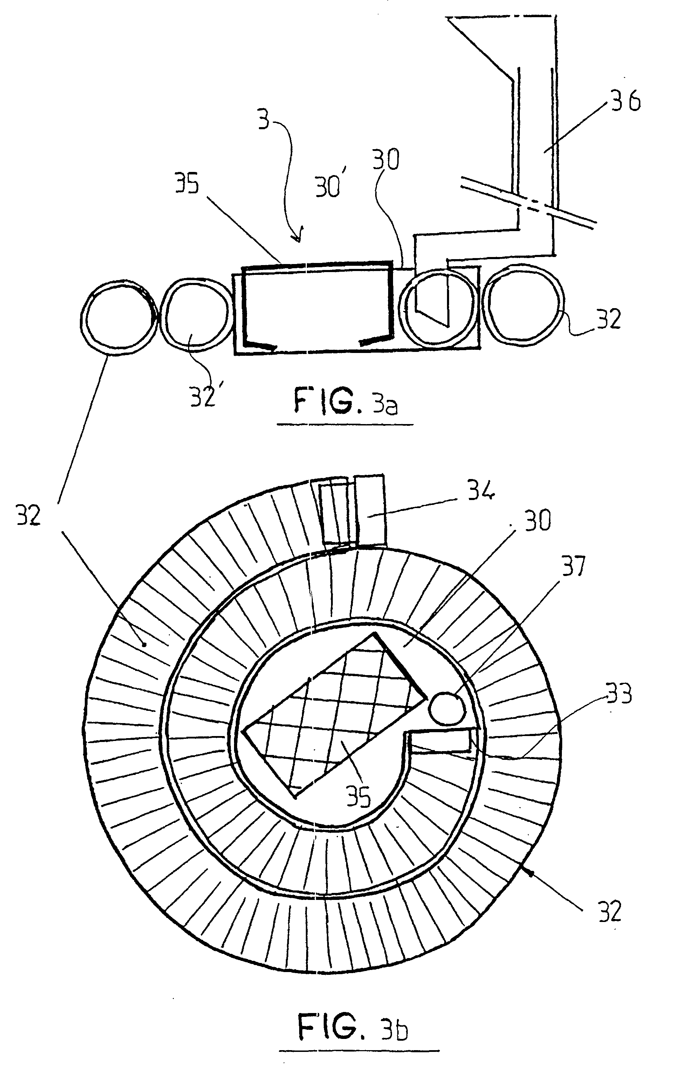

- la figure 3b représente une vue en élévation du dispositif d'humidification dans un troisième mode de réalisation.
- la figure 3a représente une vue en coupe selon BB du dispositif d'humidification de la figure précédente.

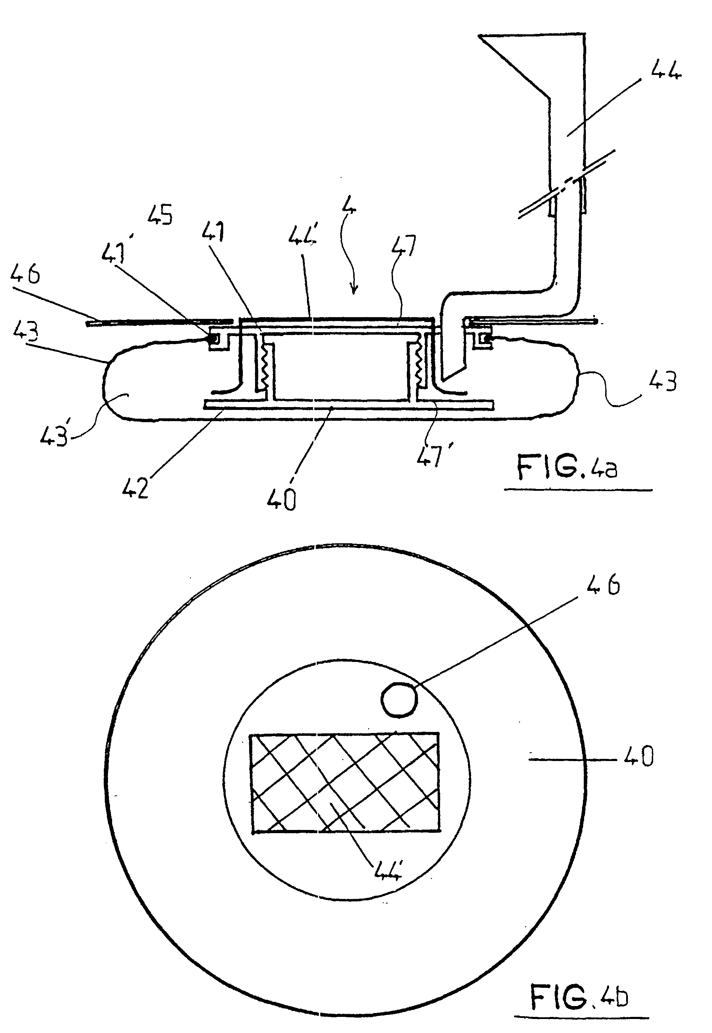

- la figure 4b représente une vue en élévation du dispositif d'humidification dans un quatrième mode de réalisation.
- la figure 4a représente une vue en coupe selon BB du dispositif d'humidification de la figure précédente.

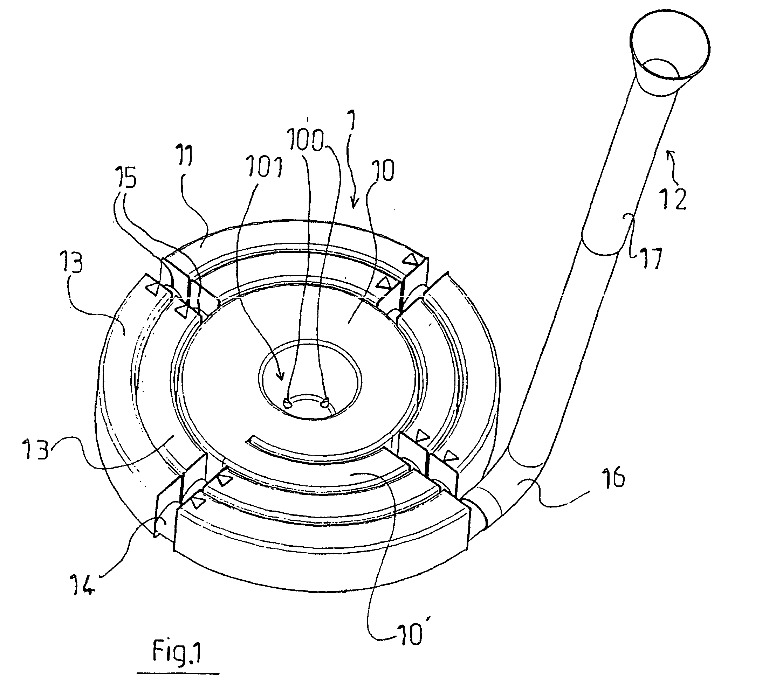

Si on se réfère à la figure 1 on peut voir que dama un premier mode de réalisation de l'invention le dispositif d'humidification de plantes en pots comprend d'une part un réservoir 1 constitué d'une pièce centrale rigide 10 en forme d'escargot présentant à son extrémité périphérique une face permettant de connecter une pièce adaptable 11 de manière que son espace interne communique avec celui de la pièce centrale 10, et d'autre part un dispositif de remplissage 12.

La pièce adaptable 11 comprend des éléments rigides 13 en forme d'arc de cercle, de section rectangulaire, dont l'une des extrémités de chaque éléments 13 est munie d'un embout 14 et l'autre extrémité d'une ouverture 15 permettant de raccorder un autre élément 13 par emboîtement de l'embout 14 dans l'ouverture 15. La pièce centrale rigide 10 comporite à son extrémité périphérique 10' une ouverture permettant de connecter le premier élément 13 de la spirale, formée par la connexion de tous les éléments en arc de cercle 13 de la pièce adaptable 11, autour de la pièce centrale rigide 10.

Ainsi, il est possible de faire varier l'espace occupé par le dispositif d'humidification au fond du pot en ajoutant ou en enlevant des éléments en arc de cercle 13.

On peut voir également que le dispositif de remplissage 12 est constitué d'un tube télescopique 17 connecté à l'une de ses extrémités, par l'intermédiaire d'un embout coudé 16, à l'extrémité libre du dernier élément 13 en arc de cercle de la partie adaptable 11, l'autre extrémité du tube 17 qui présente la forme d'un entonnoir étant destiné au remplissage d'eau du réservoir 1 formé par la pièce centrale 10 et les éléments 13 de la spirale.

La diffusion de l'eau contenue dans le réservoir 1 dans le substrat de terre est effectuée grâce à des trous 100 pratiqués dans un enfoncement 101 réalisé dans la pièce centrale 10.

La diffusion peut également être réalisée au moyen d'une mèche, non représentée, solidarisée à la face supérieure de la partie centrale rigide 10 pour permettre l'humidification du substrat de terre par remontée capillaire de l'eau contenue dans ladite partie centrale 10 et dans laquelle s'étend la mèche.

Si on se réfère maintenant aux figures 2a et 2b on peut voir que dans un deuxième mode de réalisation de l'invention le réservoir 2 du dispositif d'humidification est constitué d'une pièce centrale rigide 20 de forme circulaire à la face externe de la paroi périphérique de laquelle sont solidarisés radialement des soufflets cylindriques 21, de type accordéon, permettant par compression concentrique, selon F, de faire varier l'espace occupé par la partie déformable formée par les soufflets 21.

On peut voir également qu'une mèche 22 est solidarisée à la face supérieure 23 de la pièce centrale 20 et s'étend dans l'espace interne de cette dernière destinée à être remplie d'eau, et permet l'humidification par remonté capillaire de l'eau contenue dans la pièce centrale 20.

La pièce centrale 20, dont l'espace interne 20' communique avec celui 21' des soufflets 21, comporte, à sa face supérieure 23, un orifice 24 permettant de connecter un tube télescopique 25 pour le remplissage d'eau du réservoir 1 formé par la partie centrale 20 et les soufflets 21.

Les figures 3a et 3b montrent que dans un troisième mode de réalisation le réservoir 3 du dispositif d'humidification selon l'invention est constitué d'une pièce centrale rigide 30 en forme d'escargot connectée à son extrémité périphérique, à l'extrémité d'un tuyau annelé 32, par l'intermédiaire d'un embout 33, fermé à son extrémité libre par un bouchon 34, de manière que l'espace interne du tuyau 32 communique avec celui de la pièce centrale 30.

Une mèche 35, solidarisée à la face supérieure de la pièce centrale 30 s'étend dans l'espace interne 30' de cette dernière qui est destinée à être remplie d'eau, et permet l'humidification par remontée capillaire de l'eau.

Le remplissage d'eau du réservoir 3 ainsi formé par la piêce centrale 30 en forme d'escargot et le tuyau annelé 32 est réalisé au moyen d'un tube 36 inséré à l'une de ses extrémités dans un orifice 37 pratiqué dans la face supérieure 35 de la pièce centrale 30.

Si on se réfère maintenant aux figures 4a et 4b on peut voir que dans un quatrième mode de réalisation du dispositif d'humidification selon l'invention le réservoir 4 est constitué d'une pièce centrale rigide 40 de forme circulaire dont les bords périphériques supérieur 41 et inférieur 42 se prolongent latéralement, tandis que le bord supérieur 41 comporte un épaulement 41' permettant de solidariser une enveloppe étanche 43, en matière élastique, et de fermer cette dernière sur la pièce centrale 40 de manière à former une poche déformable destinée à contenir l'eau du réservoir 4.

Le remplissage d'eau de la poche 43 est assuré par un tube 44 dont l'une des extrémités est insérée dans un orifice 46 pratiqué dans la partie 45 prolongeant le bord 42 supérieur de la pièce centrale 40, pour venir se trouver dans l'espace 43' de la poche 43 et la paroi externe de la pièce centrale 40.

On peut voir également qu'une mèche 44' est solidarisée à la face supérieure de la pièce centrale 40 et s'étend dans l'espace interne de cette dernière destinée à être remplie d'eau, et permet l'humidification par remonté capillaire de l'eau contenue dans la pièce centrale 40.

Une couronne 46, découpée à la forme intérieure du pot correspondant, est disposée au dessus de lapièce centrale 40 et de la poche 43 de manière à protéger celle-ci du substrat afin qu'il ne l'écrase pas.

La pièce centrale 40 est avantageusement constituée de deux pièces supérieure 47 et inférieure 47' vissées l'une à l'autre de manière à pouvoir régler la hauteur de la pièce centrale 40.

On notera que, dans les trois derniers modes de réalisation, l'humidification du substrat de terre peut être également réalisée par contact direct avec le substrat tel que décrit précédemment pour le premier mode de réalisation au moyen de trous pratiqués la pièce centrale rigide.

Le dispositif d'humidification selon l'invention offre ainsi l'avantage à l'utilisateur de pouvoir équiper l'ensemble des pots et poteries existants sur le marché avec seulement 3 ou 4 modèles différents.

## Revendications

1. Dispositif d'humidification des plantes en pots du type comprenant un réservoir d'eau ( 1 ; 2 ; 3 ; 4 ) qui est destiné à être placé au fond desdits pots et qui est associé à des moyens ( 100 ; 22 ; 35 ; 44' ) pour la diffusion de l'eau et à un dispositif d'alimentation en eau (12 ; 25 ; 36 ; 44) dudit réservoir (1 ; 2 ; 3 ; 4), **caractérisé en ce que** le dit réservoir ( 1 ; 2 ; 3 ; 4) est constitué d'une partie centrale rigide de forme stable globalement cylindrique, entourée d'une partie adaptable ( 11 ; 21 ; 32 ; 43 ) au diamètre ou à la forme du fond des pots qui vont le contenir.

2. Dispositif d'humidification selon la revendication 1 **caractérisé en ce que** la partie adaptable (11) consiste en une succession d'éléments (13) en forme d'arc de cercle, de section rectangulaire ou ovale, reliés entre eux de manière que leur espace interne communique entre eux et avec celui de la pièce centrale rigide (10), et **en ce que** lesdits éléments (13) sont disposés en spirale autour de cette dernière.

3. Dispositif selon la revendication 2 **caractérisé en ce que** les éléments (13) possèdent à chaque pas de la spirale un volume et une hauteur supérieurs à ceux des éléments du pas précédent.

4. Dispositif selon la revendication 2 ou 3 **caractérisé en ce que** les éléments (13) sont solidarisables entre eux.

5. Dispositif selon la revendication 1 **caractérisé en ce que** la partie adaptable est constituée de soufflets (21) positionnés en étoile autour de la partie centrale rigide (20) et dont l'espace interne desdits soufflets (21) communique avec celui de la partie centrale (20).

6. Dispositif selon la revendication 1 **caractérisé en ce que** la partie adaptable consiste en un tuyau (32) disposé en spirale autour de ladite partie centrale rigide (30) et solidarisé à l'une des ses extrémités à cette dernière de manière que l'espace interne du tuyau (32) communique avec celui de la partie centrale rigide (30), lequel tuyau (32) est fermé à son extrémité libre par un bouchon (34).

7. Dispositif selon la revendication 1 **caractérisé en ce que** la partie adaptable est constituée d'une enveloppe étanche (43), réalisée en une matière élastique, fermée sur la pièce rigide de manière à former une poche destinée à contenir l'eau du réservoir, et **en ce qu'**il comporte des moyens (46) permettant de protéger ladite poche (43) du substrat de terre.

8. Dispositif selon la revendication 7 **caractérisé en ce que** la pièce centrale rigide (40) est constituée de deux pièces vissées l'une à l'autre de manière à pouvoir régler la hauteur de ladite pièce centrale (40).

9. Dispositif selon l'une quelconque des revendications 2 à 4 **caractérisé en ce que** le dispositif d'alimentation en eau est un tube relié, à l'une de ses extrémités, à l'extrémité libre du dernier élément de la spirale.

10. Dispositif selon la revendication 6 **caractérisé en ce que** le dispositif d'alimentation en eau remplace le bouchon de fermeture.

11. Dispositif selon l'une quelconque des revendications 5 à 7 **caractérisé en ce que** le dispositif d'alimentation en eau est un tube relié, à l'une de ses extrémités à l'espace interne de la pièce centrale.

## Claims

1. Watering system for plants in pots of the type comprising a water container (1; 2; 3; 4) which is intended to be placed at the bottom of the said pots and which is combined with means (100; 22; 35; 44') of distributing the water and with a water supply system (12; 25; 36; 44) for the said container (1; 2; 3; 4;), **characterised by** the fact that the said container (1; 2; 3; 4;) is made up of a rigid centre section of a "globally cylindrical" stable shape, surrounded by an adaptable section (11; 21; 32; 43) of the diameter and shape of the bottom of the pots that will contain it.

2. Watering system in accordance with claim 1, **characterised by** the fact that the adaptable section (11) consists of a succession of elements (13) in the shape of the arc of a circle, with a rectangular or oval section, linked together so that their internal spaces communicate with each other and with that of the rigid central section (10), and that the said elements (13) are set out in a spiral around the latter.

3. System in accordance with claim 2, **characterised by** the fact that, on each step of the spiral, the elements (13) have a volume and height greater than those of the elements on the preceding step.

4. System in accordance with claim 2 or 3, **characterised by** the fact that the elements (13) may be interlocked.

5. System in accordance with claim 1, **characterised by** the fact that the adaptable section is made up of diaphragms (21) positioned in a star shape around the rigid central part (20); the internal spaces of the said diaphragms communicate with that of the central section (20).

6. System in accordance with claim 1, **characterised by** the fact that the adaptable section consists of a tube (32) laid out in a spiral around the said rigid central section (30) and joined to one of the latter's extremities so that the internal space of the tube (32) communicates with that of the rigid central section (30); the said tube is closed at its free extremity by a stopper (34).

7. System in accordance with claim 1, **characterised by** the fact that the adaptable section is made up of a watertight envelope (43), made of an elastic material, which is closed on the rigid section in such a way as to form a pocket intended to contain water from the container, and by the fact that it contains a means (46) of protecting the said pocket (43) from the soil substratum.

8. System in accordance with claim 7, **characterised by** the fact that the rigid central section (40) is made up of two parts screwed together in such a way as to adjust the height of the said central section (40).

9. System in accordance with any of claims 2 to 4, **characterised by** the fact that the water supply system is a tube linked at one of its extremities to the free extremity of the last element of the spiral.

10. System in accordance with claim 6, **characterised by** the fact that the water supply system replaces the stopper.

11. System in accordance with any of claims 5 to 7, **characterised by** the fact that the water supply system is a tube linked at one of its extremities to the internal space of the central section.

## Patentansprüche

1. Vorrichtung zur Befeuchtung von Topfpflanzen für Blumentöpfe mit Wasserreservoir (1 ; 2 ; 3 ; 4 ). Die Vorrichtung wird auf den Topfboden gelegt. Sie ist mit einem Schlauch zur Wasserabgabe versehen ( 100 ; 22 ; 35 ; 44' ) sowie mit einem Schlauch zur Wasseraufnahme ( 12 ; 25 ; 36 ; 44) aus dem Reservoir ( 1 ; 2 ; 3 ; 4 ). Das Reservoir ( 1 ; 2 ; 3 ; 4 ) besteht aus einem mittleren festen Teil in Form eines "durchschnittlichen Zylinders", das von einer anpassbaren Form ( 11 ; 21 ; 32 ; 43) mit dem gleichen Durchmesser, bzw. der gleichen Form wie der Topfboden umgeben wird.

2. Vorrichtung zur Befeuchtung gemäß Anspruch 1, bei dem die anpassbare Form (11) aus mehreren Elementen (13 ) in Form eines Kreisbogens und eines rechteckigen oder ovalen Abschnitts besteht, die untereinander in einer Art und Weise verbunden sind, dass eine Verbindung sowohl innerhalb des Innenraums als auch mit dem festen Mittelteil ( 10 ) besteht. Dabei sind die Elemente ( 13 ) spiralenförmig um das Mittelteil angelegt.

3. Vorrichtung gemäß Anspruch 2: Volumen und Höhe der Elemente ( 13 ) steigen bei jeder Windung der Spirale im Vergleich zur vorausgehenden Windung.

4. Vorrichtung gemäß Anspruch 2 oder 3: Die Elemente ( 13 ) können untereinander verbunden werden.

5. Vorrichtung gemäß Anspruch 1: Die anpassbare Form besteht aus einem Faltenbalg ( 21), der sternförmig um das feste Mittelteil (20 ) angelegt ist. Der Innenraum des Faltenbalgs ( 21 ) ist mit dem Mittelteil ( 20 ) verbunden.

6. Vorrichtung gemäß Anspruch 1: Die anpassbare Form besteht aus einem Schlauch ( 32 ), der spiralenförmig um das feste Mittelteile ( 30 ) angebracht ist, und der mit einem Ende mit dem Mittelteil so verbunden ist, dass der Innenraum des Schlauches ( 32 ) mit dem des festen Mittelteils ( 30 ) in Verbindung steht. Der Schlauch ( 32 ) ist am freien Ende mit einem Verschlusspfropfen ( 34 ) verschlossen.

7. Vorrichtung gemäß Anspruch 1: Die anpassbare Form besteht aus einer Wasser undurchlässigen Hülle ( 43 ), die flexibel ist. Sie überdeckt das feste Mittelteil in einer Weise, dass sie eine Tasche bildet, die Wasser aus dem Reservoir aufnehmen kann. Sie ist mit einer Vorrichtung ( 46) versehen, die verhindert, dass die Tasche (43 ) Erde aufnehmen kann.

8. Vorrichtung gemäß Anspruch 7: Das feste Mittelteil ( 40) besteht aus zwei Teilen, die in einer Weise miteinander mittels Schrauben verbunden sind, dass die Höhe des Mittelteils ( 40 ) eingestellt werden kann.

9. Vorrichtung gemäß einer der Ansprüche 2 bis 4: Die Vorrichtung zur Wasserversorgung besteht aus einem Schlauch, der an einem Ende mit dem freien Ende des letzten Elements der Spirale verbunden ist.

10. Vorrichtung gemäß Anspruch 6: Die Vorrichtung zur Wasserversorgung ersetzt den Verschlusspfropfen.

11. Vorrichtung gemäß einer der Ansprüche 5 bis 7: Die Vorrichtung zur Wasserversorgung besteht aus einem Schlauch, der an einem Ende mit dem Innenraum des Mittelteils verbunden ist.
